# EUROPÄISCHE PATENTSCHRIFT

(11) **EP 3 015 720 B1**
(45) Veröffentlichungstag und Bekanntmachung des Hinweises auf die Patenterteilung: **19.06.2019**
(21) Anmeldenummer: 15185485.8
(22) Anmeldetag: 16.09.2015
(51) Int. Cl.: F16B 5/02, F16B 1/00, B60R 11/02

(54) **BAUELEMENT**
COMPONENT
COMPOSANT

(30) Priorität: 27.10.2014 DE 102014221750
(43) Veröffentlichungstag der Anmeldung: 04.05.2016
(73) Patentinhaber: ROBERT BOSCH GMBH, 70442 Stuttgart (DE)
(72) Erfinder: Menzel, Holger, 38259 Salzgitter (DE)

(56) Entgegenhaltungen:
- DE-A1-102012 022 746
- FR-A1- 2 697 060
- US-A- 3 858 151
- US-A1- 2007 047 196

## Beschreibung

### Stand der Technik

Die Erfindung betrifft ein Bauelement, welches eine Grundfläche und eine von der Grundfläche hervorstehende Auflagefläche zum Auflegen eines an dem Bauelement zu befestigenden Gegenbauelements aufweist, wobei an der Auflagefläche eine Bohrung zur Aufnahme eines Befestigungselements ausgebildet ist.

Derartige Bauelemente und Gegenbauelemente können beispielsweise aus einem Metallmaterial oder einem Kunststoffmaterial, welches vorzugsweise mit einem Metallmaterial beschichtet ist, ausgebildet sein. Zum Befestigen eines Gegenbauelements an einem Bauelement ist es beispielsweise bekannt, dass an dem Bauelement eine von der Grundfläche durch eine Auswölbung hervorstehende Auflagefläche ausgebildet ist, die eine Bohrung zur Durchführung eines Befestigungselements aufweist, wobei zum Befestigen das Gegenbauelement auf die Auflagefläche aufgelegt wird und das Befestigungselement, beispielsweise in Form einer Schraube, eines Niets, eines Bolzens oder ähnlichem, durch die Bohrung an der Auflagefläche und durch eine an dem Gegenbauelement ausgebildete Bohrung hindurchgeführt und befestigt wird. Die Auflagefläche weist üblicherweise einen ebenen Bereich auf, auf welchem das Gegenbauelement zum Verbinden mit dem Bauelement flächig aufgelegt werden kann. Grundfläche und Auflagefläche verlaufen vorzugsweise parallel zueinander, wobei durch das Hervorstehen der Auflagefläche von der Grundfläche Grundfläche und Auflagefläche in zwei verschiedenen Ebenen zueinander angeordnet sein können.

Eine durch eine Auswölbung von der Grundfläche hervorstehende Auflagefläche ist jedoch starr mit der Grundfläche des Bauelements verbunden, so dass kein Toleranzausgleich möglich ist, wobei aufgrund des nicht gegebenen Toleranzausgleiches in dem Bauelement und in dem an dem Bauelement befestigten Gegenbauelement Spannungen entstehen können. Hierdurch kann wiederum ein Verzug in der Verbindung zwischen dem Bauelement und Gegenbauelement entstehen. Zudem kann es zu einer schlechten Masseverbindung zwischen dem Bauelement und dem Gegenbauelement kommen.

Weiter ist es bekannt, dass zum Befestigen eines Gegenbauelements an einem Bauelement an dem Bauelement ein abgewinkelter, von der Grundfläche herausgebogener Arm ausgebildet ist, welcher ebenfalls eine Aufnahmefläche zum Auflegen des Gegenbauelements und eine an der Aufnahmefläche ausgebildete Bohrung zur Aufnahme eines Befestigungselementes, wie einer Schraube, aufweist. Gegenüber der durch eine Auswölbung ausgebildeten, starr mit der Grundfläche des Bauelements verbundenen Auflagefläche weist die an einem Arm ausgebildete Auflagefläche eine gewisse Flexibilität auf, welche jedoch in Wesentlichen in eine seitliche Richtung ausgebildet ist, so dass zur Ausbildung eines Toleranzausgleiches der Arm im Wesentlichen in eine seitliche Richtung ausweichen kann. Beim Befestigen des Gegenbauelements an dem Bauelement über den die Auflagefläche aufweisenden Arm kann dadurch ein Biegemoment entstehen, welches ebenfalls zu einer Beeinträchtigung der Masseverbindung führen kann. Durch das Biegemoment kann es zudem bei dem Befestigen des Gegenbauelements an dem Bauelement zu einem Verschieben der Auflagefläche und damit der an der Auflagefläche ausgebildeten Bohrung durch eine Bewegung des gesamten Arms kommen, was die Montage bzw. das Befestigen erschwert und zudem ein unerwünschtes Verkanten des Befestigungselements während des Befestigungsvorganges begünstigt werden kann. Weiter kann der herausgebogene Arm eine negative Auswirkung auf elektromagnetische Verträglichkeitseigenschaften (EMV-Eigenschaften) des Bauelements haben, da der Arm eine Antennenwirkung ausbilden kann.

Die US 3 858 151 zeigt einen verbesserten Verbinder zum Befestigen einer schraubenförmig genuteten flexiblen elektrischen Leitung mit einer Verbindungsdose, der als eine einteilige Metallklammer ausgebildet ist. Die Klammer hat einen rohrförmigen Körper mit Laschen und Widerhaken, die in die schraubenförmige Nut in der Leitung eingreifen, um zu verhindern, dass die Leitung aus der Klammer herausgezogen wird, und um die Klammer und die Leitung elektrisch miteinander zu verbinden. Die Widerhaken und Laschen sind entlang einer gemeinsamen schraubenförmigen Bahn angeordnet, um das Drehen oder Schrauben der Klammer auf ein Ende der Leitung zu erleichtern. Ein Kragen an dem inneren Ende der Klammer umschließt das Ende der Leitung, um Drähte in der Leitung gegen den Eingriff mit irgendwelchen Graten zu schützen, die am Ende der Leitung gebildet sein können. Elastisch auslenkbare Haltearme und Flansche greifen klemmend in eine Wand der Verbindungsdose ein, um den Clip und die Leitung an Ort und Stelle zu halten. Die Haltearme sind mit spitzen Endbereichen versehen, die gegen die Wand der Verbindungsdose gedrückt werden, um die Klemme und die Verbindungsdose elektrisch miteinander zu verbinden.

### Offenbarung der Erfindung

Vor diesem Hintergrund wird mit der vorliegenden Erfindung ein Bauelement gemäß dem Hauptanspruch vorgestellt. Zweckmäßige Ausgestaltungen und vorteilhafte Weiterbildungen der Erfindung sind in den Unteransprüchen angegeben.

Die vorliegende Erfindung zeichnet sich insbesondere dadurch aus, dass an der Grundfläche mindestens eine zumindest bereichsweise die Auflagefläche umgebende nutförmige Aussparung ausgebildet ist.

Durch die nutförmige Aussparung kann eine flexible Anbindung der Auflagefläche an der Grundfläche ausgebildet werden, wodurch eine Federwirkung der Auflagefläche relativ zu der Grundfläche erreicht werden kann. Die Federwirkung kann insbesondere in senkrechter Richtung zu der Grundfläche und damit in senkrechter Richtung zu der Auflagefläche, welche vorzugsweise parallel zu der Grundfläche ausgerichtet ist, ausgebildet sein, so dass die Auflagefläche in Befestigungsrichtung des Befestigungselementes, welche in Z-Richtung verläuft, flexibel und damit in einem begrenzten Grad zusammen mit der Bohrung relativ zu der Grundfläche nach oben und nach unten bewegbar ausgebildet ist. Eine mögliche seitliche Verschiebung der Auflagefläche und damit der in der Auflagefläche ausgebildeten Bohrung kann gleichzeitig verhindert werden, so dass die Montage bzw. Befestigung des Befestigungselements in der Bohrung sicher und ohne einer Gefahr einer Fehlmontage ausgeführt werden kann, wobei insbesondere ein Verkanten des Befestigungselementes bei der Befestigung in der Bohrung verhindert werden kann, da die Auflagefläche bzw. die Bohrung beim Befestigen nicht seitlich verschoben oder verbogen werden kann. Das Verhindern eines seitlichen Verschiebens der Bohrung und damit auch der Auflagefläche kann eine gute elektrische bzw. galvanische Verbindung, insbesondere eine Masseverbindung zwischen dem Bauelement und dem Gegenbauelement durch die Möglichkeit der Ausbildung eines flächigen Kraftschlusses ermöglichen. Zudem kann die Auflagefläche gute EMV-Eigenschaften aufweisen und die Ausbildung einer Antennenwirkung durch die Auflagefläche kann verhindert werden. Die nutförmige Aussparung kann beispielsweise in Form eines Schlitzes in die Grundfläche eingeschnitten oder eingefräst sein. Die Schlitze sind dabei vorzugsweise derart schmal ausgebildet, dass ein Eindringen von Schmutz- oder Fremdkörperpartikeln in die nutförmige Aussparung und damit in die Grundfläche des Bauelements verhindert werden kann. Es kann eine nutförmige Aussparung oder es können auch zwei oder mehr nutförmige Aussparungen ausgebildet sein, welche dann vorzugsweise versetzt zueinander angeordnet sind. Dass die nutförmige Aussparung die Auflagefläche zumindest bereichsweise umgibt, bedeutet insbesondere, dass die ein oder mehreren nutförmigen Aussparungen nicht vollständig um die Auflagefläche herum ausgebildet sind, sondern jeweils entlang eines Teilbereiches eines Außenumfangs der Auflagefläche. Sind zwei oder mehr nutförmige Aussparungen ausgebildet, können diese durch ihre zueinander versetzte Anordnung derart angeordnet sein, dass sich die nutförmigen Aussparungen um den gesamten Außenumfang der Auflagefläche erstrecken können. Durch zwei oder mehr nutförmige Aussparungen kann die Federwirkung gegenüber nur einer nutförmigen Aussparung vergrößert werden. Die nutförmige Aussparung kann beispielsweise bogenförmig und/oder eckig ausgebildet sein. Das Bauelement ist vorzugsweise plattenförmig ausgebildet und kann beispielsweise die Funktion einer Blende oder einer Wand aufweisen. Das Gegenbauelement kann beispielsweise ebenfalls eine Platte, beispielsweise eine Leiterplatte, oder aber beispielsweise auch ein Gehäuse sein. Eingesetzt werden kann das Bauelement beispielsweise in einem Autoradio, Navigationssystem oder Fahrerinformations- und/oder -Assistenzsystem.

Erfindungsgemäß ist es vorgesehen, dass sich die nutförmige Aussparung in einem Winkel α von 190° ≤ α ≤ 350°, bevorzugt von 250° ≤ α ≤ 350°, besonders bevorzugt von 300° ≤ α ≤ 350°, erstreckt. Durch die Größe des Winkels α kann die Federwirkung und damit die Festigkeit der Auflagefläche eingestellt werden. Je größer der Winkel α ist, durch welchen die Länge der nutförmigen Aussparung definiert ist, desto größer ist der Bereich bzw. der Außenumfang der Auflagefläche, der von der nutförmigen Aussparung umgeben ist, so dass mit einem steigenden Winkel α auch die Federwirkung der Auflagefläche relativ zu der Grundfläche in senkrechter Richtung erhöht und damit die Festigkeit der Auflagefläche in Richtung der Grundfläche reduziert werden kann, so dass der erreichbare Toleranzausgleichsgrad erhöht werden kann. Die Größe des Winkels α kann ferner vorzugsweise in Abhängigkeit des verwendeten Materials des Bauelements ausgewählt werden.

Bevorzugt ist vorgesehen, dass an der Grundfläche eine erste, zumindest bereichsweise die Auflagefläche umgebende nutförmige Aussparung und eine zweite, zumindest bereichsweise die Auflagefläche umgebende nutförmige Aussparung ausgebildet sind, wobei die erste nutförmige Aussparung und die zweite nutförmige Aussparung zumindest abschnittsweise konzentrisch zueinander angeordnet sein können. Die beiden nutförmigen Aussparungen sind vorzugsweise um einen gemeinsamen Mittelpunkt angeordnet, welcher hier bevorzugt durch die an der Auflagefläche mittig ausgebildete Bohrung ausgebildet ist. Dass die beiden nutförmigen Aussparungen zumindest abschnittsweise konzentrisch zueinander angeordnet sind, bedeutet, dass die beiden beabstandet zueinander angeordneten nutförmigen Aussparungen sich zumindest bereichsweise überlappen, so dass die beiden nutförmigen Aussparungen zumindest teilweise ineinandergreifend angeordnet sind. Durch das Vorsehen von zwei nutförmigen Aussparungen kann die Federwirkung der Auflagefläche gegenüber nur einer nutförmigen Aussparung verbessert werden. Es können ferner auch mehr als zwei nutförmige Aussparungen, die konzentrisch, ineinandergreifend angeordnet sind, bereichsweise um die Auflagefläche herum ausgebildet sein. Sind zwei oder mehr nutförmige Aussparungen vorgesehen, können zwischen zwei benachbart zueinander angeordneten nutförmigen Aussparungen Federarme ausgebidlet sein, wodurch die Federwirkung der Auflagefläche weiter verbessert werden kann.

Um bei einer Aufbringung einer Kraft auf die Auflagefläche ein seitliches Ausweichen und damit ein Verbiegen der Auflagefläche sicher verhindern zu können, ist es vorzugsweise vorgesehen, dass die erste nutförmige Aussparung und die zweite nutförmige Aussparung spiegelsymmetrisch zueinander ausgebildet sind. Durch die spiegelsymmetrische Ausbildung der beiden nutförmigen Aussparungen kann sichergestellt werden, dass die Federwirkung über den Umfang der Auflagefläche gleichmäßig verteilt werden kann, so dass bei einer Bewegung der Auflagefläche relativ zu der Grundfläche, die Auflagefläche lediglich senkrecht zur Grundfläche bewegt wird und nicht parallel zu der Grundfläche verschoben werden kann. Durch die spiegelsymmetrische Ausbildung weisen die erste und die zweite nutförmige Aussparung vorzugsweise die gleiche Form, insbesondere die gleiche Länge und die gleiche Breite auf, wobei die beiden Aussparungen an der Auflagefläche gespiegelt zueinander angeordnet sind.

Weiter kann es vorzugsweise vorgesehen sein, dass die erste nutförmige Aussparung und die zweite nutförmige Aussparung jeweils einen ersten Abschnitt mit einem ersten Abstand zu der Bohrung und einen zweiten Abschnitt mit einem zweiten Abstand zu der Bohrung aufweisen, wobei der erste Abstand bevorzugt kleiner ist als der erste Abstand. Durch die Ausbildung der nutförmigen Aussparungen mit zwei verschiedenen Abschnitten, die einen unterschiedlichen Abstand zu der Bohrung aufweisen, kann bei einer gleichzeitigen symmetrischen Ausbildung der nutförmigen Aussparungen zueinander und damit dem Erreichen einer möglichst gleichmäßig über den Umfang der Auflagefläche ausgebildeten Federwirkung ein Ineinandergreifen der beiden nutförmigen Aussparungen einfach und definiert ausgebildet werde. Die beiden Abschnitte einer nutförmigen Aussparung sind vorzugsweise gleich lang ausgebildet. Verbunden sein können die beiden Abschnitte einer nutförmigen Aussparung über einen schlitzförmigen Steg.

Weitere, die Erfindung verbessernde Maßnahmen werden nachstehend gemeinsam mit der Beschreibung bevorzugter Ausführungsbeispiele der Erfindung anhand der Figuren näher dargestellt.

Es zeigen:
- Fig. 1: eine schematische Darstellung eines Ausschnitts eines Bauelements gemäß der Erfindung,
- Fig. 2: eine schematische Darstellung einer möglichen Ausgestaltung von zwei nutförmigen Aussparungen um eine Aufnahmefläche an einem Bauelement gemäß der Erfindung,
- Fig. 3: eine schematische Darstellung einer weiteren möglichen Ausgestaltung von zwei nutförmigen Aussparungen um eine Aufnahmefläche an einem Bauelement gemäß der Erfindung, und
- Fig. 4: eine schematische Darstellung einer Befestigung eines Gegenbauelements an einem wie in Fig. 1 gezeigten Bauelement.

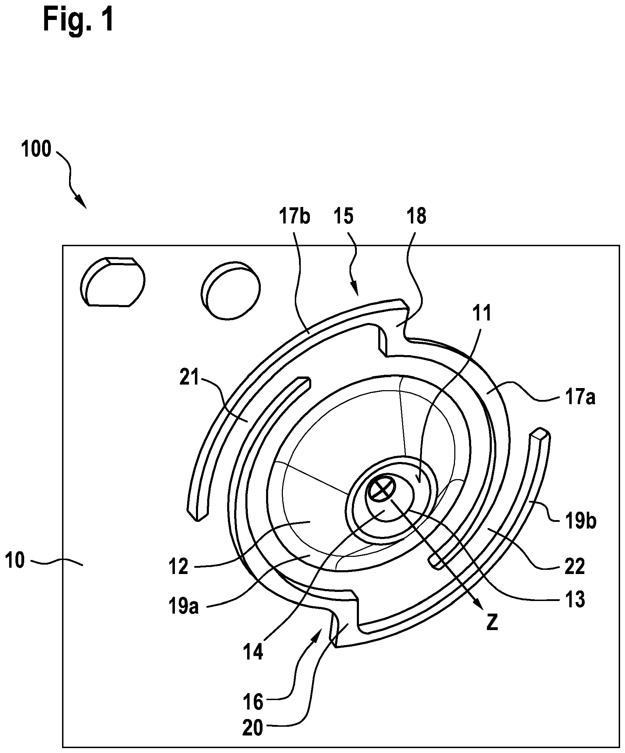

Fig. 1 zeigt schematisch einen Ausschnitt eines Bauelements 100, wobei das Bauelement 100 hier in Form einer Metallplatte ausgebildet ist, welche beispielsweise eine Frontplattenrückwand eines Radios, insbesondere eines Autoradios, sein kann. Das Bauelement 100 weist eine Grundfläche 10 und eine von der Grundfläche 10 hervorstehende Auflagefläche 11 zum Auflegen eines an dem Bauelement 100 zu befestigenden Gegenbauelements 200, wie es beispielsweise in Fig. 5 gezeigt ist, auf. Die Auflagefläche 11, welche eben ausgebildet ist, verläuft im Wesentlichen parallel zu der Grundfläche 10. Ausgebildet ist die Auflagefläche 11 auf einer an der Grundfläche 10 ausgebildeten Auswölbung 12, welche beispielsweise durch ein Tiefziehverfahren ausgebildet sein kann. An der Auflagefläche 11, insbesondere mittig der Auflagefläche 11, ist eine Bohrung 13 zur Aufnahme eines Befestigungselementes 14, hier in Form einer Schraube, ausgebildet ist.

Beabstandet zu der Auflagefläche 11 sind an der Grundfläche 10 eine erste nutförmige Aussparung 15 und eine zweite nutförmige Aussparung 16 ausgebildet, welche die Auflagefläche 11 zumindest bereichsweise umgeben bzw. umranden. Die beiden nutförmigen Aussparungen 15, 16, welche schlitzförmig ausgebildet sind, sind dabei auch beabstandet zu der Auswölbung 12 angeordnet. Die beiden nutförmigen Aussparungen 15, 16 sind konzentrisch zueinander um die Bohrung 13 und die im Wesentlichen kreisrund ausgebildete Auflagefläche 11 angeordnet. Die beiden nutförmigen Aussparungen 15, 16 sind dabei derart angeordnet, dass sie sich bereichsweise überlappen und damit bereichsweise ineinandergreifend angeordnet sind. Die beiden nutförmigen Aussparungen 15, 16 weisen die gleiche Form, insbesondere die gleiche Länge und Breite, auf und sie sind spiegelsymmetrisch zueinander angeordnet.

Die erste nutförmige Aussparung 15 weist einen ersten Abschnitt 17a und einen zweiten Abschnitt 17b auf, wobei beide Abschnitte 17a, 17b bogenförmig und gleich lang ausgebildet sind. Die beiden Abschnitte 17a, 17b sind versetzt zueinander angeordnet, so dass der Abstand des ersten Abschnitts 17a zu der Bohrung 13 kleiner ist als der Abstand des zweiten Abschnitts 17b zu der Bohrung 13. Verbunden sind die beiden Abschnitte 17a, 17b über einen schlitzförmigen Steg 18.

Die zweite nutförmige Aussparung 16 weist ebenfalls einen ersten Abschnitt 19a, und einen zweiten Abschnitt 19b auf, wobei beide Abschnitte 19a, 19b bogenförmig und gleich lang ausgebildet sind. Auch hier sind die beiden Abschnitte 19a, 19b versetzt zueinander angeordnet, so dass der Abstand des ersten Abschnitts 19a zu der Bohrung 13 kleiner ist als der Abstand des zweiten Abschnitts 19b zu der Bohrung 13. Verbunden sind die beiden Abschnitte 19a, 19b ebenfalls über einen schlitzförmigen Steg 20.

Der schlitzförmige Steg 18 der ersten nutförmigen Aussparung 15 ist im Wesentlichen gegenüberliegend zu dem schlitzförmigen Steg 20 der zweiten nutförmigen Aussparung 16 angeordnet. Der Abstand des ersten Abschnitts 17a der ersten nutförmigen Aussparung 15 zu der Bohrung 13 ist gleich groß zu dem Abstand des ersten Abschnitts 19a der zweiten nutförmigen Aussparung 16 zu der Bohrung 13. Ferner ist der Abstand des zweiten Abschnitts 17b der ersten nutförmigen Aussparung 15 zu der Bohrung 13 gleich groß zu dem Abstand des zweiten Abschnitts 19b der zweiten nutförmigen Aussparung 16 zu der Bohrung 13.

Dort, wo die beiden nutförmigen Aussparungen 15, 16 ineinandergreifen, überlappt ein Teilbereich des zweiten Abschnitts 17b der ersten nutförmigen Aussparung 15 einen Teilbereich des ersten Abschnitts 19a der zweiten nutförmigen Aussparung 16, wobei zwischen den beiden sich überlappenden Teilbereichen ein erster Federarm 21 ausgebildet ist, und ein Teilbereich des zweiten Abschnitts 19b der zweiten nutförmigen Aussparung 16 überlappt einen Teilbereich des ersten Abschnitts 17a der ersten nutförmigen Aussparung 15, wobei zwischen diesen beiden sich überlappenden Teilbereichen ein zweiter Federarm 22 ausgebildet ist. Die beiden Federarme 21, 22 sind zueinander gegenüberliegend angeordnet und weisen die gleiche Länge und auch die gleiche Breite auf. In Abhängigkeit der Länge und auch der Breite der Federarme 21, 22 kann die durch die nutförmigen Aussparungen 15, 16 erzeugte Federwirkung der Auflagefläche 11 eingestellt werden, wobei beispielsweise je länger die Federarme 21, 22 sind, desto größer die Federwirkung ausgebildet sein kann. Durch die Federwirkung kann die Auflagefläche 11 in einer senkrechten Richtung Z zur Grundfläche 10 nach oben und nach unten federnd bewegt werden, insbesondere wenn das Befestigungselement 14 zum Verbinden des Bauelements 100 mit einem Gegenbauelement 200 in die Bohrung 13 eingebracht und befestigt wird. Durch die federnde Bewegbarkeit der Auflagefläche 11 und damit der in der Auflagefläche 11 ausgebildeten Bohrung 13 kann ein Toleranzsausgleich in senkrechter Richtung Z und damit in Befestigungsrichtung des Befestigungselements 13 ermöglicht werden. Eine unerwünschte seitliche Verschiebung oder Verkippbewegung der Auflagefläche 11 kann hingegen durch die Ausbildung der Federarme 21, 22 und damit durch die Ausbildung und Anordnung der nutförmigen Aussparungen 15, 16 um die Auflagefläche 11 herum verhindert werden.

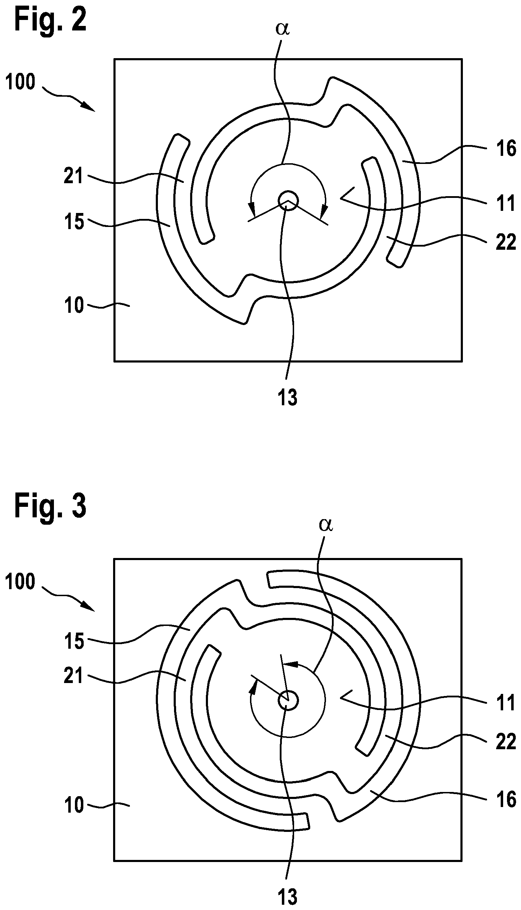

Fig. 2 zeigt schematisch eine mögliche Ausgestaltung eines Bauelements 100, die ähnlich zu der in Fig. 1 gezeigten Ausgestaltung ist. Hierbei sind zwei nutförmige Aussparungen 15, 16 um die Auflagefläche 11 herum ausgebildet, wobei sich die spiegelsymmetrisch zueinander angeordneten nutförmigen Aussparungen 15, 16 jeweils in einem Winkel α von etwa 210° um die Auflagefläche 11 erstrecken.

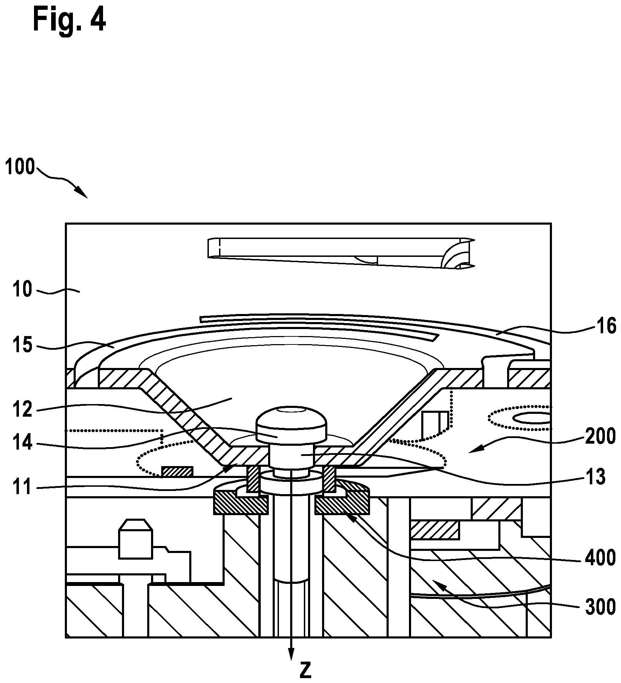

Bei der in Fig. 3 schematisch gezeigten Ausgestaltung eines Bauelements 100, sind ebenfalls zwei nutförmige Aussparungen 15, 16 um die Auflagefläche 11 herum ausgebildet, wobei sich die beiden spiegelsymmetrisch zueinander angeordneten nutförmigen Aussparungen 15, 16 jeweils in einem Winkel α von etwa 310° um die Auflagefläche 11 erstrecken. Dadurch, dass sich bei der in Fig. 3 gezeigten Ausgestaltung die nutförmigen Aussparungen 15, 16 um einen größeren Winkel α erstrecken als die in Fig. 2 gezeigten nutförmigen Aussparungen 15, 16, sind auch die beiden Federarme 21, 22 bei der in Fig. 3 gezeigten Ausgestaltung länger als bei der in Fig. 2 gezeigten Ausgestaltung ausgebildet, so dass bei der in Fig. 4 gezeigten Ausgestaltung eine größere Federwirkung erreicht werden kann als bei der in Fig. 2 gezeigten Ausgestaltung.

In Fig. 4 ist schematisch eine Befestigung eines Gegenbauelements 200 an einem Bauelement 100 gezeigt, wobei das Gegenbauelement 200, welches hier als Leiterplatte ausgebildet ist, auf der Auflagefläche 11 des Bauelements 100 flächig aufliegt. Dem Bauelement 100 gegenüberliegend ist an dem Gegenbauelement 200 ferner eine Kunststoffblende 300 angeordnet, wobei das durch die in der Auflagefläche 11 ausgebildete Bohrung 13 hindurchgeführte Befestigungselement 14 in Form einer Schraube durch das Bauelement 100, das Gegenbauelement 200 und die Kunststoffblende 300 geführt ist, um alle diese Elemente miteinander zu verbinden bzw. aneinander zu befestigen. Zwischen dem Gegenbauelement 200 und der Kunststoffblende 300 ist ferner ein Blechrahmen 400 angeordnet.

Durch die in der Grundfläche 10 des Bauelements 100 ausgebildeten nutförmigen Aussparungen 15, 16 können die bei dem Gegenbauelement 200 in Form einer Leiterplatte eventuell ausgebildeten Schichtdickenunterschiede durch die Federwirkung in Z-Richtung ausgeglichen werden, wodurch in dem Gegenbauelement 200 herrschende Spannungen und/oder Biegemomente wesentlich reduziert werden können.

Die in Fig. 1 - 4 gezeigten nutförmigen Aussparungen 15, 16, 23 und die dadurch ausgebildeten Federarme 21, 22 weisen eine bogenförmige und damit kreissegmentartige Ausgestaltung auf. Es ist aber auch möglich, dass die nutförmigen Aussparungen 15, 16, 23 und die dadurch ausgebildeten Federarme 21, 22 andere Verläufe, wie beispielsweise elliptische, dreieckige oder rechtwinklige Verläufe, aufweisen können.

Die Erfindung beschränkt sich in ihrer Ausführung nicht auf die vorstehend angegebenen bevorzugten Ausführungsbeispiele. Vielmehr ist eine Anzahl von Varianten denkbar, welche von den dargestellten Lösungen auch bei grundsätzlich anders gearteten Ausführungen Gebrauch macht.

## Patentansprüche

1. Bauelement (100), mit einer Grundfläche (10) und einer von der Grundfläche (10) hervorstehenden Auflagefläche (11) zum Auflegen eines an dem Bauelement (100) zu befestigenden Gegenbauelements (200), wobei an der Auflagefläche (11) eine Bohrung (13) zur Aufnahme eines Befestigungselements (14) ausgebildet ist, wobei an der Grundfläche (10) mindestens eine zumindest bereichsweise die Auflagefläche (11) umgebende nutförmige Aussparung (15, 16, 23) ausgebildet ist, und wobei sich die nutförmige Aussparung (15, 16, 23) in einem Winkel α von 190° ≤ α ≤ 350° um die Auflagefläche (11) erstreckt..

2. Bauelement (100) nach Anspruch 1, **dadurch gekennzeichnet, dass** an der Grundfläche (10) eine erste zumindest bereichsweise die Auflagefläche (11) umgebende nutförmige Aussparung (15) und eine zweite zumindest bereichsweise die Auflagefläche (11) umgebende nutförmige Aussparung (16) ausgebildet sind, wobei die erste nutförmige Aussparung (15) und die zweite nutförmige Aussparung (16) zumindest abschnittsweise konzentrisch zueinander angeordnet sind.

3. Bauelement (100) nach Anspruch 2, **dadurch gekennzeichnet, dass** die erste nutförmige Aussparung (15) und die zweite nutförmige Aussparung (16) spiegelsymmetrisch zueinander ausgebildet sind.

4. Bauelement (100) nach Anspruch 2 oder 3, **dadurch gekennzeichnet, dass** die erste nutförmige Aussparung (15) und die zweite nutförmige Aussparung (16) jeweils einen ersten Abschnitt (17a, 19a) mit einem ersten Abstand zu der Bohrung (13) und einen zweiten Abschnitt (17b, 19b) mit einem zweiten Abstand zu der Bohrung (13) aufweisen, wobei der erste Abstand kleiner ist als der zweite Abstand.

## Claims

1. Component (100) having a main surface (10) and a bearing surface (11), which projects from the main surface (10) and is intended to bear a mating component (200), which is to be fastened on the component (100), wherein the bearing surface (11) contains a bore (13) for accommodating a fastening element (14), wherein the main surface (10) contains at least one groove-like aperture (15, 16, 23), which at least partially surrounds the bearing surface (11), and wherein the groove-like aperture (15, 16, 23) extends at an angle α of 190° ≤ α ≤ 350° around the bearing surface (11).

2. Component (100) according to Claim 1, **characterized in that** the main surface (10) contains a first groove-like aperture (15), which at least partially surrounds the bearing surface (11), and a second groove-like aperture (16), which at least partially surrounds the bearing surface (11), wherein the first groove-like aperture (15) and the second groove-like aperture (16) are arranged to be at least partially concentric in relation to one another.

3. Component (100) according to Claim 2, **characterized in that** the first groove-like aperture (15) and the second groove-like aperture (16) are of mirror-symmetrical design in relation to one another.

4. Component (100) according to Claim 2 or 3, **characterized in that** the first groove-like aperture (15) and the second groove-like aperture (16) each have a first portion (17a, 19a) at a first distance from the bore (13) and a second portion (17b, 19b) at a second distance from the bore (13), wherein the first distance is smaller than the second distance.

## Revendications

1. Composant (100), comprenant une surface de base (10) et une surface d'appui (11) faisant saillie depuis la surface de base (10) pour l'appui d'un composant conjugué (200) devant être fixé sur le composant (100), un alésage (13) pour recevoir un élément de fixation (14) étant réalisé sur la surface d'appui (11), au moins un évidement en forme de rainure (15, 16, 23) entourant au moins en partie la surface d'appui (11) étant réalisé sur la surface de base (10), et l'évidement en forme de rainure (15, 16, 23) s'étendant suivant un angle α de 190° ≤ α ≤ 350° autour de la surface d'appui (11).

2. Composant (100) selon la revendication 1, **caractérisé en ce qu'**un premier évidement en forme de rainure (15) entourant au moins en partie la surface d'appui (11) et un deuxième évidement en forme des rainure (16) entourant au moins en partie la surface d'appui (11) sont réalisés sur la surface de base (10), le premier évidement en forme de rainure (15) et le deuxième évidement en forme de rainure (16) étant disposés au moins en partie de manière concentrique l'un à l'autre.

3. Composant (100) selon la revendication 2, **caractérisé en ce que** le premier évidement en forme de rainure (15) et le deuxième évidement en forme de rainure (16) sont réalisés avec une symétrie spéculaire l'un par rapport à l'autre.

4. Composant (100) selon la revendication 2 ou 3, **caractérisé en ce que** le premier évidement en forme de rainure (15) et le deuxième évidement en forme de rainure (16) présentent à chaque fois une première portion (17a, 19a) avec une première distance à l'alésage (13) et une deuxième portion (17b, 19b) avec une deuxième distance à l'alésage (13), la première distance étant inférieure à la deuxième distance.
